# EUROPEAN PATENT SPECIFICATION

(11) **EP 2 130 723 B1**
(45) Date of publication and mention of the grant of the patent: **15.02.2012**
(21) Application number: 08104266.5
(22) Date of filing: 05.06.2008
(51) Int. Cl.: B60R 16/023, G05B 19/042, H04L 29/06, H04L 12/26, H05K 11/02

(54) **An electronic device capable of receiving and a method to transfer data from a tester**
Elektronische Vorrichtung zum Empfangen von und Verfahren zum Senden von Daten aus einem Tester
Dispositif électronique capable de recevoir et procédé de transfert des données d'un testeur

(43) Date of publication of application: 09.12.2009
(73) Proprietor: Robert Bosch GmbH, 70442 Stuttgart (DE)
(72) Inventor: Simmes, Dirk, 77815 Bühl-Oberbruch (DE); Iske, Burkhard, 71272 Renningen-Malmsheim (DE); Prelle, Oliver, 74343 Sachsenheim (DE)

(56) References cited:
- EP-A- 0 788 946
- EP-A- 1 069 542
- DE-A1-102006 059 632
- JP-A- 2007 038 904
- US-A- 5 619 412
- US-A1- 2003 137 409
- US-A1- 2003 158 635
- BECK R ET AL: "Backbone-Architektur: Vom zentralen Gateway zur systemintegrierenden Kommunikationsplattform" VDI BERICHTE, DUESSELDORF, DE, no. 1646, 27 September 2001 (2001-09-27), pages 277-291, XP002450780 ISSN: 0083-5560
- STEINER P ET AL: "REQUIREMENTS AND SYSTEM ARCHITECTURE OF FUTURE BODY ELECTRONICS" VDI BERICHTE, DUESSELDORF, DE, no. 1646, 27 September 2001 (2001-09-27), pages 1103-1114, XP002281420 ISSN: 0083-5560
- HEINTZ, F; HUGEL, R.; BREMER, W.: "Diagnosis in networked vehicle systems" IMECHE, no. C422/022, 1990, pages 15-18, XP002509079
- KÖTZ, J.; WARSCHAT, U.: "Konzeption eines zukünftigen Gateways für die Vernetzung im Automobil" ELEKTRONIK IM KRAFTFAHRZEUG, no. 1547/2000, 9 October 2000 (2000-10-09), pages 215-225, XP002509080 VDI-Verlag, Düsseldorf (DE)

## Description

### State of the Art

The invention relates to the field of electronic devices assisting in the transfer of data from a tester to an electronic control unit ( ECU ) in vehicles.

Such a device as defined in the preamble of claim 1 is, for example, disclosed in Heintz, F., et. al.: "Diagnosis in networked vehicle system", iMech E, 1990, pages 15-18.

The electronic devices assisting in the transfer of data from a tester to an ECU are known as state of the art. These devices are located in a vehicle, receive data from the tester connected through a bus and transfer the same to different ECUs in the vehicle.

A method for programming data into a vehicle component is described in EP 0788946 A2. EP 1069542 A2 discloses a method for exchanging data between a vehicle and a controlling station via a mobile phone network. In the US 20030137409 A1 a vehicle antitheft device and a respective program are described, whereas a code verification is executed with a surveillance target such as an engine ECU or an immobility ECU installed in a vehicle.

### Advantages of the invention

The device and method according to the independent patent claims have the below mentioned advantages:

The advantage of the invention is that the tester need not be connected to the electronic device till complete data is transferred to the ECUs which might last few hours or the electronic device need not have a permanent memory unit where data is received and stored from the tester and later transferred to the ECUs.

The electronic device receives the data from a tester, stores the data in a temporary memory unit which is either a flash card or an MMC (Multi Media Card^{®}) card or an SD (Secure Digital^{®}) card and then transfers the data to one or more ECUs. Using the temporary memory unit only during the transfer of the data from tester to the ECUs and not having it permanently with the electronic device, results in saving of the cost, as the same temporary memory unit can be reused with different electronic devices.

Once the data is transferred from the tester to the electronic device, the tester is disconnected from the electronic device and is used with the other electronic devices to transfer data for other ECUs resulting in better utilization of the tester.

Further improvements and/or advantages are realised by the features of the dependent patent claims.

The connectivity between the electronic device and the tester is a standard bus like CAN (Controller Area Network^{®}), LIN (Local Interconnect Network^{®}), MOST (Media Oriented Systems Transport^{®}) or any other bus used in the vehicles. There is no need of any special connectivity.

The connectivity between the electronic device and the ECUs use standard bus like CAN, LIN, MOST or any other bus used in vehicles. There is no need of any special connectivity.

The temporary memory unit is a flash card or an MMC card or an SD card or any such storage device which is a standard memory unit available easily and with variable capacity to store the data.

Storing of the data received from the tester, first in a temporary memory unit and later transferring the same to the ECUs has the advantage that the electronic device verifies the integrity of the data received from the tester before the data in the ECUs is overwritten.

The functionality of the electronic device can be built into one of the ECUs easily. The ECU needs to have a means to communicate to the tester, a means to communicate to other ECUs and a means to access a temporary memory unit.

The functionality of the electronic device can be built into an existing audio device easily. The audio device needs to have a means to communicate to the tester, a means to communicate to other ECUs and a means to access a temporary memory unit.

### Brief descriptions of the drawings:

- Figure 1: shows the schematic of connectivity of an electronic device with other ECUs and a tester
- Figure 2: shows the vehicle running under normal condition

### Description of the embodiments:

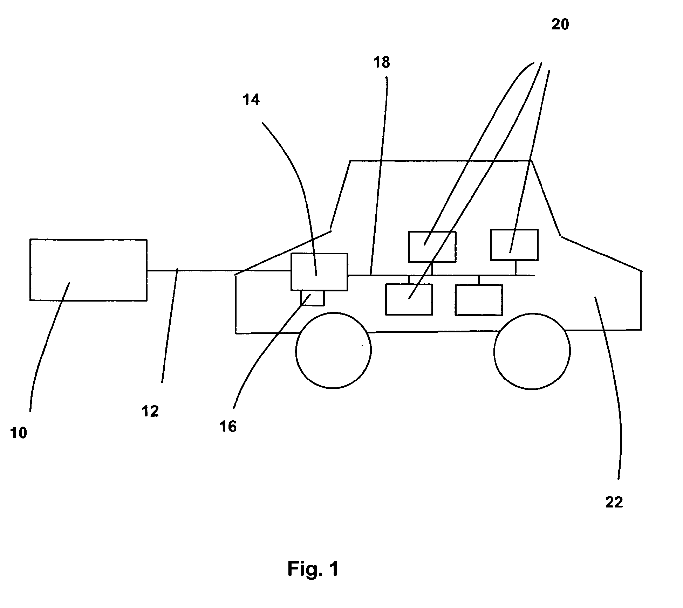

The Fig. 1 shows a schematic of connectivity between an electronic device 14, a tester 10, one or more ECUs 20 and a temporary memory unit 16, when data is to be transferred from the tester to the ECUs. The electronic device 14 located in a vehicle 22 which typically is an automobile, is connected with a tester 10 which is external to the vehicle 22, through a first bus 12 which is a standard bus like CAN, LIN or MOST or any similar bus used in a vehicle to connect ECUs. The electronic device 14 is connected to one or more ECUs 20 through a second bus 18 which again is a CAN, LIN, MOST or any similar bus. A temporary memory unit 16 is connected to the electronic device 14 to store the data received from the tester 10 temporarily.

The tester 10 is a device which is used to communicate with the ECUs 20 in a vehicle, for example reading and writing into ECU memory for diagnostic purposes, sending commands to ECUs to perform some specific functions, executing some test routines on the ECUs, setting/changing some parameters in the ECUs, changing or reprogramming the software in the ECUs etc.

The ECUs 20 in the vehicle 22 contain lot of software and data needed to control the vehicle. During the manufacturing or testing of the vehicle or during the servicing of the vehicle in a workshop, there will be need to change or reprogram the software/data in the ECUs. The reprogramming of the software/data in the ECUs is done using the tester 10. The first bus 12 connecting the tester 10 and electronic device 14 normally operates at a higher data transfer rate. The second bus 18 connecting the electronic device 14 and the ECUs 20 normally operates at a lower data transfer rate.

When the software/data in one or more of the ECUs 20 needs to be changed or reprogrammed, the tester 10 is connected to the electronic device 14. Also the temporary memory unit 16 is connected to the electronic device 14. The memory unit 16 has a very high capacity to store the data, ex. few hindered megabytes.

The tester 10 sends the data through the bus 12 at a higher data transfer rate. Here the meaning of the data includes the software or changes to the software or look up tables or any other information required by the ECUs to control the vehicle. The electronic device 14 receives the data and stores the same in the temporary memory unit 16. Once the complete data is received form the tester 10, the electronic device 14 checks the integrity of the data using a simple integrity check algorithm, for example verification of the checksum of the data received from the tester 10. If the data integrity check fails, the electronic device 10 requests the tester 10 to resend the data.

If the data integrity check passes, then the tester 10 is disconnected from the electronic device 14. The tester 10 is used to reprogram ECUs in some other vehicle.

The electronic device 14 checks what part of the data from the temporary memory unit 16 is meant for which of the ECUs 20. The association of the data with a specific ECU can be established by including ECU identification number as a part of the data itself. Based on the ECU identification number, electronic device 14 transfers the relevant part of the data from the temporary memory unit 16 to the relevant ECU 20. Once the complete data from the temporary memory unit 16 is transferred to the required ECUs 20, the electronic device 14 generates a first type of notification indicating the successful transfer of the data from the temporary memory unit 16 to the ECUs. At this point the temporary memory unit 16 is removed. The temporary memory unit 16 is used in some other vehicle to reprogram the software in the ECUs.

If the complete data is not transferred successfully from the temporary memory unit 16, to all the required ECUs, the electronic device 14 generates a second type of notification indicating the data transfer to the ECUs 20 failed. The reason for failure of the data transfer to the ECUs 20 needs to be diagnosed using the tester 10.

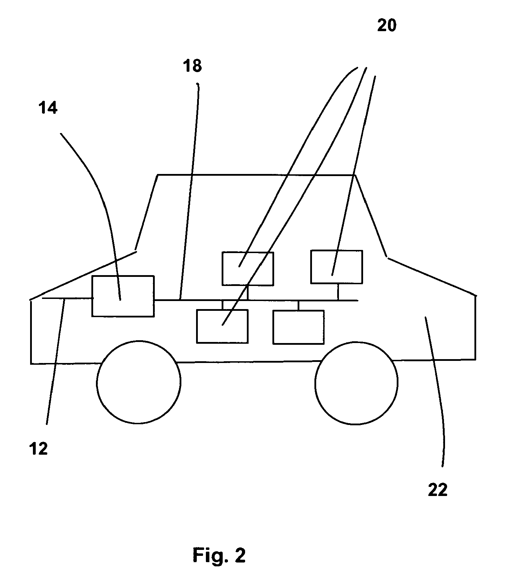

Figure 2 shows the vehicle running under normal condition. Here the tester and the temporary memory unit are disconnected from the electronic device 14 as the temporary memory unit 16 is no more used during normal running of the vehicle.

As an alternative embodiment, the functionality of the electronic device 14 can be built into one of the existing ECUs 20 which is referred as Master ECU. The master ECU has a means to communicate with a tester 10, a means to communicate with the other ECUs 20 and a means to communicate with the temporary memory unit 16. All the functionality explained for transferring of data from the tester 10 to the ECUs 20 is handled by the master ECU.

As yet another embodiment, the functionality of the electronic device 14 can be built into an existing audio device normally found in a vehicle. The audio device comes with a standard means to access a temporary memory unit like SD card, MMC card or a flash card. The audio device additionally has a means to communicate with a tester 10, a means to communicate with the ECUs 20. All the functionality explained for transferring of data from the tester to the ECUs is handled by the audio device.

## Claims

1. An electronic device (14) capable of receiving data from a tester (10), the said electronic device (14) comprising a means to establish a connection to the tester (10) through a first bus (12), the said electronic device (14) comprising a means to establish a connection to at least one electronic control unit (20) through a second bus (18), **characterised by** comprising a means to establish a connection to a removable temporary memory unit (16) used to store the data received from the tester (10).

2. An electronic device (14) according to claim 1 wherein the first bus (12) is a vehicle bus like CAN (Controller Area Network^{®}), LIN (Local Interconnect Network^{®}), MOST (Media Oriented Systems Transport^{®}) or any other bus for communication.

3. An electronic device (14) according to claim 1 wherein the second bus (18) is a vehicle bus like CAN, LIN, MOST or any other bus for communication.

4. An electronic device (14) according to claim 1 wherein the means to be connected to the first bus (12) operates at a higher data transfer rate than the means to be connected to the second bus (18).

5. An electronic device (14) according to claim 1 wherein the temporary memory unit (16) is a flash card or a MMC (Multi Media Card^{®}) card or a SD (Secure Digital^{®}) card or any such storage device.

6. An electronic device (14) according to claim 1 wherein the functionality of the electronic device (14) is built into one of the electronic control unit (20) which has a means to communicate with the tester (10), has a means to communicate with the electronic control unit (20) and has a means to communicate with the temporary memory unit (16).

7. An electronic device (14) according to claim 1 wherein the functionality of the electronic device (14) is built into an existing audio device which has a means to communicate with the tester (10), has a means to communicate with electronic control unit (20) and has a means to communicate with the temporary memory unit (16).

8. An electronic device (14) according to claim 1 wherein the electronic device (14) verifies the integrity of the data stored in the temporary memory unit (16) before transferring the same to the electronic control unit (20).

9. An electronic device (14) according to claim 1 wherein the data transfer from the tester (10) takes place during manufacturing of the vehicle or testing of the vehicle or servicing of the vehicle in a workshop or under any similar condition where the data in the electronic control unit (20) needs to be updated.

10. A method to transfer data from a tester (10) to at least one electronic control unit (20) in a vehicle (22), comprising the steps:
- connecting the tester (10) to an electronic device (14) in a vehicle (22),
- connecting a temporary memory unit (16) to the electronic device (14),
- transferring the data from the tester (10) to the electronic device (14) through a first bus (12),
- storing the data in the temporary memory unit (16),
- disconnecting the tester (10),
- transferring the data from the temporary memory unit (16) to at least one of the electronic control units (20) connected through a second bus (18), and
- disconnecting and removing the temporary memory unit (16).

## Patentansprüche

1. Elektronische Vorrichtung (14), die Daten von einer Prüfeinrichtung (10) empfangen kann, wobei die elektronische Vorrichtung (14) ein Mittel umfasst, um eine Verbindung mit der Prüfeinrichtung (10) über einen ersten Bus (12) aufzubauen, wobei die elektronische Vorrichtung (14) ein Mittel umfasst, um eine Verbindung zu wenigstens einer elektronischen Steuereinheit (20) über einen zweiten Bus (18) aufzubauen, **gekennzeichnet durch** ein Mittel, um eine Verbindung zu einer entfernbaren temporären Speichereinheit (16), die verwendet wird, um die von der Prüfeinrichtung (10) empfangenen Daten zu speichern, aufzubauen.

2. Elektronische Vorrichtung (14) nach Anspruch 1, wobei der erste Bus (12) ein Fahrzeugbus wie etwa CAN (Controller Area Network^{®}), LIN (Local Interconnect Network^{®}), MOST (Media Oriented Systems Transport^{®}) oder irgendein anderer Bus für die Kommunikation ist.

3. Elektronische Vorrichtung (14) nach Anspruch 1, wobei der zweite Bus (18) ein Fahrzeugbus wie etwa CAN, LIN, MOST oder irgendein anderer Bus für die Kommunikation ist.

4. Elektronische Vorrichtung (14) nach Anspruch 1, wobei die mit dem ersten Bus (12) zu verbindenden Mittel mit einer höheren Datenübertragungsrate arbeiten als die mit dem zweiten Bus (18) zu verbindenden Mittel.

5. Elektronische Vorrichtung (14) nach Anspruch 1, wobei die temporäre Speichereinheit (16) eine Flash-Karte oder eine MMC-Karte (Multimedia Card^{®}) oder eine SD-Karte (Secure Digital^{®}-Karte) oder irgendeine andere derartige Speichervorrichtung ist.

6. Elektronische Vorrichtung (14) nach Anspruch 1, wobei die Funktionalität der elektronischen Vorrichtung (14) in die elektronische Steuereinheit (20) eingebaut ist, die ein Mittel für die Kommunikation mit der Prüfeinrichtung (10), ein Mittel für die Kommunikation mit der elektronischen Steuereinheit (20) und ein Mittel für die Kommunikation mit der temporären Speichereinheit (16) besitzt.

7. Elektronische Vorrichtung (14) nach Anspruch 1, wobei die Funktionalität der elektronischen Vorrichtung (14) in eine vorhandene Audiovorrichtung eingebaut ist, die ein Mittel für die Kommunikation mit der Prüfeinrichtung (10), ein Mittel für die Kommunikation mit der elektronischen Steuereinheit (20) und ein Mittel für die Kommunikation mit der temporären Speichereinheit (16) umfasst.

8. Elektronische Vorrichtung (14) nach Anspruch 1, wobei die elektronische Vorrichtung (14) die Integrität der in der temporären Speichereinheit (16) gespeicherten Daten verifiziert, bevor diese zu der elektronischen Steuereinheit (20) übertragen werden.

9. Elektronische Vorrichtung (14) nach Anspruch 1, wobei die Datenübertragung von der Prüfeinrichtung (10) während der Herstellung des Fahrzeugs oder der Prüfung des Fahrzeugs oder der Wartung des Fahrzeugs in einer Werkstatt oder unter irgendwelchen ähnlichen Umständen, unter denen die Daten in der elektronischen Steuereinheit (20) aktualisiert werden müssen, erfolgt.

10. Verfahren für die Übertragung von Daten von einer Prüfeinrichtung (10) zu wenigstens einer elektronischen Steuereinheit (20) in einem Fahrzeug (22), das die folgenden Schritte umfasst:
- Verbinden der Prüfeinrichtung (10) mit einer elektronischen Vorrichtung (14) in einem Fahrzeug (22),
- Verbinden einer temporären Speichereinheit (16) mit der elektronischen Vorrichtung (14),
- Übertragen der Daten von der Prüfeinrichtung (10) zu der elektronischen Vorrichtung (14) über einen ersten Bus (12),
- Speichern der Daten in der temporären Speichereinheit (16),
- Trennen der Prüfeinrichtung (10),
- Übertragen der Daten von der temporären Speichereinheit (16) zu wenigstens einer der elektronischen Steuereinheiten (20), die über einen zweiten Bus (18) angeschlossen sind, und
- Trennen und Entfernen der temporären Speichereinheit (16).

## Revendications

1. Dispositif électronique (14) capable de recevoir des données d'un testeur (10), ledit dispositif électronique (14) comprenant un moyen permettant d'établir une connexion au testeur (10) par l'intermédiaire d'un premier bus (12), ledit dispositif électronique (14) comprenant un moyen permettant d'établir une connexion à au moins une unité de commande électronique (20) par l'intermédiaire d'un second bus (18), **caractérisé en ce qu'**il comprend un moyen permettant d'établir une connexion à une unité de mémoire temporaire amovible (16) utilisée pour stocker les données reçues du testeur (10).

2. Dispositif électronique (14) selon la revendication 1, dans lequel le premier bus (12) est un bus pour véhicule tel qu'un bus CAN (Controler Area Network^{®}), un réseau LIN (Local Interconnect Network®), un bus MOST (Media Oriented Systems Transport®) ou tout autre bus de communication.

3. Dispositif électronique (14) selon la revendication 1, dans lequel le second bus (18) est un bus pour véhicule du type CAN, LIN, MOST ou tout autre bus de communication.

4. Dispositif électronique (14) selon la revendication 1, dans lequel le moyen destiné à être connecté au premier bus (12) fonctionne à un débit de transfert de données plus élevé que le moyen destiné à être connecté au second bus (18).

5. Dispositif électronique (14) selon la revendication 1, dans lequel l'unité de mémoire temporaire (16) est une carte de mémoire flash ou une carte MMC (MultiMedia Card®) ou une carte de mémoire SD (Secure Digital®) ou tout autre dispositif de stockage de ce type.

6. Dispositif électronique (14) selon la revendication 1, dans lequel la fonctionnalité du dispositif électronique (14) est intégrée à l'une d'unités de commande électroniques (20) qui comportent un moyen pour communiquer avec le testeur (10), qui comportent un moyen pour communiquer avec l'unité de commande électronique (20) et qui comportent un moyen pour communiquer avec l'unité de mémoire temporaire (16).

7. Dispositif électronique (14) selon la revendication 1, dans lequel la fonctionnalité du dispositif électronique (14) est intégrée à un dispositif audio existant qui comporte un moyen permettant de communiquer avec le testeur (10), qui comporte un moyen permettant de communiquer avec l'unité de commande électronique (20) et qui comporte un moyen permettant de communiquer avec l'unité de mémoire temporaire (16).

8. Dispositif électronique (14) selon la revendication 1, dans lequel le dispositif électronique (14) vérifie l'intégrité des données stockées dans l'unité de mémoire temporaire (16) avant de transférer ces dernières à l'unité de commande électronique (20).

9. Dispositif électronique (14) selon la revendication 1, dans lequel le transfert de données depuis le testeur (10) s'effectue pendant la fabrication du véhicule ou le test du véhicule ou l'entretien du véhicule dans un atelier ou dans des conditions semblables dans lesquelles les données contenues dans l'unité de commande électronique (20) nécessitent une mise à jour.

10. Procédé de transfert de données d'un testeur (10) à une unité de commande électronique (20) dans un véhicule (22), comprenant les étapes suivantes :
- connecter le testeur (10) à un dispositif électronique (14) dans un véhicule (22),
- connecter une unité de mémoire temporaire (16) au dispositif électronique (14),
- transférer les données du testeur (10) au dispositif électronique (14) par l'intermédiaire d'un premier bus (12),
- stocker les données dans l'unité de mémoire temporaire (16),
- déconnecter le testeur (10),
- transférer les données de l'unité de mémoire temporaire (16) à au moins l'une des unités de commande électroniques (20) connectées par l'intermédiaire d'un second bus (18), et
- déconnecter et retirer l'unité de mémoire temporaire (16).
